# EUROPÄISCHE PATENTSCHRIFT

(11) **EP 3 111 535 B1**
(45) Veröffentlichungstag und Bekanntmachung des Hinweises auf die Patenterteilung: **13.03.2019**
(21) Anmeldenummer: 15701038.0
(22) Anmeldetag: 27.01.2015
(51) Int. Cl.: H02K 1/27, H02K 1/02

(54) **MAGNETANORDNUNG, INSBESONDERE FÜR EINE ELEKTRISCHE MASCHINE, SOWIE ELEKTRISCHE MASCHINE MIT EINER MAGNETANORDNUNG**
MAGNET ARRANGEMENT, IN PARTICULAR FOR AN ELECTRIC MACHINE, AND ELECTRIC MACHINE WITH A MAGNET ARRANGEMENT
DISPOSITIF MAGNÉTIQUE, DESTINÉ NOTAMMENT À UNE MACHINE ÉLECTRIQUE, ET MACHINE ÉLECTRIQUE ÉQUIPÉE D'UN TEL DISPOSITIF MAGNÉTIQUE

(30) Priorität: 27.02.2014 DE 102014203528
(43) Veröffentlichungstag der Anmeldung: 04.01.2017
(73) Patentinhaber: Volkswagen Aktiengesellschaft, 38440 Wolfsburg (DE)
(72) Erfinder: TASCHE, Matthias, 34260 Kaufungnen (DE); LÜHRS, Georg-Friedrich, 34128 Kassel (DE); RAUCHSCHWALBE, Matthias, 34225 Baunatal (DE)
(86) Internationale Anmeldenummer: PCT/EP2015/051541
(87) Internationale Veröffentlichungsnummer: WO 2015/128141

(56) Entgegenhaltungen:
- EP-A1- 1 383 143
- EP-A1- 1 830 451
- JP-A- H09 182 329
- JP-A- 2009 027 847
- US-A1- 2004 258 436
- US-A1- 2007 138 892
- US-A1- 2010 079 024

## Beschreibung

Die Erfindung betrifft eine Magnetanordnung, insbesondere für eine elektrische Maschine. Die Erfindung betrifft weiterhin eine elektrische Maschine mit einer derartigen Magnetanordnung.

### Stand der Technik

Aus der Druckschrift US 7 804 216 B2 ist eine elektrische Reluktanzmaschine bekannt mit einem Rotor, dessen Kern aus Ankerblechen von magnetischem Stahl zusammengesetzt ist. In diesem Kern sind Aufnahmeschlitze für Permanentmagnete ausgebildet, in denen Permanentmagnete eingesetzt sind. Die Aufnahmeschlitze sind paarweise entlang Seiten gleichseitiger Dreiecke angeordnet. Zur Beeinflussung eines sich in der Reluktanzmaschine ausbildenden magnetischen Feldes bzw. Flusses, insbesondere zum Ausbilden magnetischer Pole, sind im Kern des Rotors mittig zu jedem der Paare der Aufnahmeschlitze zwischen den magnetischen Polen des Rotors liegende Luftzwischenräume nah am Umfang des Rotors angeordnet. Seitlich jedes der Permanentmagnete sind weitere, beidseitig unmittelbar an die Aufnahmeschlitze anschließende Lufttaschen ausgebildet, die ebenfalls der Beeinflussung des magnetischen Feldes bzw. Flusses dienen. Die Permanentmagnete selbst sind quaderförmig mit vollständig geschlossenem Querschnitt aus einem Werkstoff mit hoher Magnetisierung gefertigt.

Aus der Druckschrift DE 698 23 239 T2 ist ein Permanentmagnet-Synchronmotor mit einem drehbar angeordneten Rotor mit einem Rotoreisenkern und in der Nähe des Außenumfangsrandes des Rotoreisenkerns angeordneten Permanentmagneten bekannt. Der Permanentmagnet weist einen Hauptmagnetpolabschnitt und Hilfspolabschnitte auf, die an Magnetpolendabschnitten mit dem Hauptmagnetpolabschnitt integral ausgebildet sind. In einer in der Druckschrift DE 698 23 239 T2 dargestellten Ausführung ist der Permanentmagnet im wesentlichen halbzylinderförmig ausgebildet und besteht aus einem sich in die tangentiale Richtung erstreckenden geraden Abschnitt, an beiden Enden des geraden Abschnitts ausgebildeten senkrechten Abschnitten, schrägen Abschnitten, die sich jeweils in Richtung ihrer wechselseitigen Annäherung von den senkrechten Abschnitten schräg nach außen erstrecken, und einem Bogenabschnitt, der die beiden schrägen Abschnitte verbindet und sich ungefähr parallel zum Außenumfangsrand des Rotoreisenkerns erstreckt. Der Hauptmagnetpolabschnitt ist hier zwischen dem geraden Abschnitt und dem Bogenabschnitt ausgebildet. Die an den Magnetpolendabschnitten in der Nähe des Hauptmagnetpolabschnitts und damit integral ausgebildeten Hilfspolabschnitte weisen die schrägen Abschnitte auf. Sowohl der Hauptmagnetpolabschnitt als auch die Hilfspolabschnitte sind auf die gleiche Polarität magnetisiert, so dass die magnetischen Wege an den Magnetpolendabschnitten durch die aus den Hilfspolabschnitten herausfließenden magnetischen Flüsse gesättigt sind. In dieser Ausführungsform sind die schrägen Abschnitte und der Bogenabschnitt auf eine Polarität magnetisiert, während der gerade Abschnitt auf die andere Polarität magnetisiert ist.

Wie nun weiterhin in der Druckschrift DE 698 23 239 T2 ausgeführt ist, verlaufen, weil die Hilfspolabschnitte magnetisiert sind, die durch die Hilfspolabschnitte erzeugten magnetischen Flüsse ungefähr normal zu einer schrägen Fläche von den schrägen Abschnitten zum Rotoreisenkern. Daher kann der magnetische Weg in der Nähe der Magnetpolendabschnitte im Rotoreisenkern, d. h. in der Nähe der Hilfspolabschnitte, in höherem Maße gesättigt sein. Dadurch kann verhindert werden, dass die magnetischen Flüsse an den Magnetpolendabschnitten kurzgeschlossen werden, wodurch die Größe des einen Zwischenraum zwischen einem Stator und dem Rotor passierenden magnetischen Flusses zunimmt, so dass das Motordrehmoment erhöht wird.

Außerdem weisen die Hilfspolabschnitte an den Verbindungspunkten zwischen den schrägen Abschnitten und dem Bogenabschnitt geknickte Abschnitte auf, die Grenzen definieren, so dass der Abstand zwischen magnetischen Nordpolen und magnetischen Südpolen der Hilfspolabschnitte kleiner gemacht werden kann. Dadurch sollen das Volumen der Magnete in den Hilfspolabschnitten reduziert und der Abstand zwischen dem Außenumfang des Rotoreisenkerns und den Hilfspolabschnitten vergrößert werden, so dass der magnetische Weg ausreichend gesättigt sein kann. Ferner kann ein Pol-Polabstand in Umfangsrichtung des Rotors vergrößert werden, wodurch die Festigkeit des Rotoreisenkerns erhöht wird.

Die EP 1 383 143 A1 beschreibt einen magnetischen Festkörper, der aus einem seltenen magnetischen Material besteht, welches stark magnetisch, jedoch trotzdem leicht im Gewicht ist.
In der EP 1 830 451 A1 ist ein Rotor für einen Motor und ein Verfahren zur Herstellung desselben offenbart. Hierbei ist ein Verbundmagnetabschnitt aus einem Magnetpulver umfassend ein Bindemittel, und ein Weichmagnetjochabschnitt aus einem weichen magnetischen Pulver enthaltend ein Bindemittel vorgesehen, wobei diese miteinander komprimiert geformt und miteinander verbunden sind. Hierbei wird der permanentmagnetische Werkstoff NdFeB eingesetzt. Dieses Dokument widmet sich einem schonenden Fertigungsverfahren, bei welchem die Komponenten für eine Rotoranwendung ausreichend fest miteinander verbunden sind.

In der US 2010/0 079 024 A1 ist eine rotierende Maschine mit gesintertem Magnet und ein Verfahren zur Herstellung eines gesinterten Magnets offenbart. Hierin wird angestrebt, die Menge an schweren Seltenerden-Elementen zu reduzieren, während ein Hochenergieprodukt oder hohe Hitzeresistenz erreicht wird. Auch hier wird der Werkstoff NdFeB pulverförmig eingesetzt. Die unterschiedlichen Materialien des gesinterten Magneten sind schichtweise in verschieden orientierten Lagen aufgebaut.

Die JP H9 - 182 329 A befasst sich mit einem Magnetrotor für eine Rotationsmaschine. Sie stellt sich der Aufgabe, den Verlust des magnetischen Flux zu reduzieren und die Fertigungsqualität und Haltbarkeit zu steigern, wobei ein metallischer Pulver-Verbund mit ferromagnetischen und nichtmagnetischen Bestandteilen kompaktiert gesintert sind. Hierbei ist nichtmagnetisches Material in den magnetischen Flux erzeugenden Abschnitten, welche in den Rotorkern eindringen, vorgesehen.

Die JP 2009 - 027 847 A befasst sich mit einem Permanentmagnet und Motortyp mit eingebetteten Magneten, worin die Permanentmagnete eingesetzt sind. Hierbei sollen unter anderem die Größe des Motors reduziert und die Leistung gesteigert werden. Hierzu werden Permanentmagnete mit einer Mehrzahl magnetischer Materialien mit unterschiedlichem Koerzivkräften eingesetzt. Die Lage mit der höchsten Koerzivkraft ist am nächsten zu der Rotoroberfläche angeordnet, wobei die leicht magnetisierbare Achse des betreffenden Magnets im Wesentlichen senkrecht zu der Rotoroberfläche ausgerichtet ist.

In der US 2007/0 138 892 A1 ist eine asymmetrische Verbundmagnetstruktur für einen gelappten Rotor offenbart. Der Rotor umfasst ein erstes Paar Schlitze und ein zweites Paar Schlitze, wobei erste Magnete in den ersten und zweiten Schlitzen und zweite Magnete nur in den ersten Schlitzen aufgenommen sind und die ersten Magnete zwischen dem korrespondierenden ersten Magnet und der Außenoberfläche angeordnet sind. Infolgedessen wird ein im Wesentlichen sinusförmiger elektromagnetischer Flux erzielt, wobei eine geringere minimale Induktivität und damit ein größeres Verhältnis zwischen maximaler und minimaler Induktivität erreicht wird, wodurch der Beitrag zum Reluktanzmoment erhöht ist. Zudem ist die Geräuschemission bei hohen Geschwindigkeiten reduziert, weil weniger Luftspalte vorgesehen sind.
Bei modernen elektrischen Maschinen, wie z.B. Reluktanzmaschinen oder Permanentmagnet-Synchronmotoren, insbesondere für einen Einsatz in Kraftfahrzeugen, vorzugsweise in Elektro- und/oder Hybridfahrzeugen, ist eine Steigerung des erzielbaren Drehmoments bzw. der abgebbaren Leistung bei gleichzeitiger Reduktion von Bauraum und Gewicht bedeutsam. Dazu werden u.a. Magnetanordnungen bzw. Permanentmagnete mit hoher Magnetisierung eingesetzt. Diese Permanentmagnete werden bevorzugt aus Werkstoffen hergestellt, die verhältnismäßig rar und damit kostspielig sind.

### Darstellung der Erfindung: Aufgabe, Lösung, Vorteile

Die Erfindung hat die Aufgabe, bei einer elektrischen Maschine der beschriebenen Art sowie bei einer Magnetanordnung, insbesondere für eine derartige elektrische Maschine, eine weitere Verringerung der benötigten Menge kostspieliger magnetischer Werkstoffe ohne Einbußen bei Kraft bzw. Drehmoment bzw. Leistung zu erreichen.

Diese Aufgabe wird gelöst durch eine Magnetanordnung, für eine Ausnehmung in einem Stator- und/oder einem Rotorblechschnitt als Ersatz für herkömmlich gestaltete Permanentmagnete, umfassend einen magnetischen Nordpol N und einen magnetischen Südpol S, die wenigstens einen mit einem permanentmagnetischen Werkstoff ausgebildeten Abschnitt umfasst, in dem wenigstens eine nichtmagnetische Ausnehmung ausgebildet ist zum Beeinflussen einer Richtung und/oder Stärke eines von der Magnetanordnung hervorgerufenen Magnetfeldes und/oder magnetischen Flusses. Die Magnetanordnung ist vor allem dadurch gekennzeichnet, dass die wenigstens eine nichtmagnetische Ausnehmung im permanentmagnetischen Werkstoff als eine allseitig geschlossene Ausnehmung ausgebildet ist, wobei die nichtmagnetische Ausnehmung allseitig von permanentmagnetischem Werkstoff umgeben ist, wobei die Magnetanordnung weiterhin wenigstens einen mit einem magnetisch leitenden Werkstoff ausgebildeten Abschnitt umfasst, in dem wenigstens eine nichtmagnetische Ausnehmung ausgebildet ist zum Beeinflussen einer Richtung und/oder Stärke eines von der Magnetanordnung hervorgerufenen Magnetfeldes und/oder magnetischen Flusses. Insbesondere ist diese Magnetanordnung vorgesehen für eine Verwendung in einer elektrischen Maschine.

Bei elektrischen Maschinen erfolgt eine Optimierung darin ausgebildeter Magnetkreise, d.h. der Verteilung von magnetischem Feld bzw. magnetischem Fluss in ihrer Stärke und räumlichen Richtung, d.h. der magnetischen Feldstärke bzw. Stärke des magnetischen Flusses und der räumlichen Verteilung bzw. Richtung der Feldlinien des magnetischen Feldes bzw. der Flusslinien des magnetischen Flusses, in der Maschine, bevorzugt deren Stator und Rotor, herkömmlich durch Ausgestaltung von Stator- und/oder Rotorblechschnitten mit Ausnehmungen für Magnetanordnungen, beispielsweise Permanentmagnete, und mit in den Blechschnitten angeordneten Lufttaschen. Dadurch sollen Material und Gewicht eingespart und die von der Maschine abgegebene mechanische Leistung gesteigert werden. Die vorliegende Erfindung beruht nun auf der Erkenntnis, dass eine noch weitergehende Optimierung derartiger Magnetkreise, d.h. eine Gewichts- und Materialersparnis und/oder eine Leistungssteigerung auch oder zusätzlich dadurch erzielt werden kann, dass in dem permanentmagnetischen Werkstoff eine oder mehrere nichtmagnetische Ausnehmungen ausgebildet werden. Diese sind derart angeordnet, dass dadurch eine Beeinflussung einer räumlichen Verteilung des sich im Betrieb der elektrischen Maschine ausbildenden magnetischen Feldes bzw. Flusses vorgenommen wird, durch die eine Steigerung der auf die Magnetanordnungen im Betrieb wirkenden, durch das magnetische Feld bzw. den magnetischen Fluss bedingten Kräfte erzielt wird. Es zeigt sich aber, dass auch eine Ausbildung wenigstens einer nichtmagnetischen Ausnehmung im mit permanentmagnetischem Werkstoff ausgebildeten Abschnitt möglich ist, bei der wenigstens im wesentlichen keine Beeinflussung des sich im Betrieb der elektrischen Maschine ausbildenden magnetischen Feldes bzw. Flusses und damit der im Betreib dadurch hervorgerufenen Kräfte auftritt und dennoch eine merkliche Einsparung an permanentmagnetischem Werkstoff erzielt wird, so dass damit eine Gewichts- und Kostenersparnis erhalten wird.

Die wenigstens eine nichtmagnetische Ausnehmung im mit permanentmagnetischem Werkstoff ausgebildeten Abschnitt ist bevorzugt derart gestaltet, dass gedanklich ausgehend von einem z.B. ebenflächigen Körper aus permanentmagnetischem Werkstoff nun im Bereich der Ausnehmungen permanentmagnetischer Werkstoff durch nichtmagnetischen Werkstoff bzw. Luft oder Vakuum, allgemeiner formuliert: durch einen Stoff mit geringerer relativer magnetischer Permeabilität, bevorzugt durch einen Werkstoff mit der Luft bzw. dem Vakuum ähnlichen bzw. vergleichbaren magnetischen Eigenschaften, ersetzt wird. Insbesondere durch Ausbildung luftgefüllter, nichtmagnetischer Ausnehmungen wird eine besonders kostengünstige Bauform erhalten, die Gewicht einspart und mit der wahlweise auch eine Steigerung der magnetischen Kräfte und dadurch von Drehmoment und Leistung der elektrischen Maschine erzielbar ist. Insbesondere kann damit beim Rotor der elektrischen Maschine Gewicht eingespart und so dessen Trägheitsmoment verringert werden, was zu einer Einsparung elektrischer Leistung insbesondere beim Beschleunigen der Maschine beiträgt und deren diesbezügliches Betriebsverhalten verbessert. Die wenigstens eine Ausnehmung kann dabei als Bohrung, Höhlung, Schlitz, Grube, Vertiefung, Rille, Lochung oder dergleichen des mit permanentmagnetischem Werkstoff ausgebildeten Abschnitts der Magnetanordnung ausgebildet sein.

Vorteilhafte Ausgestaltungen der Erfindung sind in den Unteransprüchen gekennzeichnet.

Gemäß der erfindungsgemäßen Magnetanordnung ist die wenigstens eine nichtmagnetische Ausnehmung im permanentmagnetischen Werkstoff als eine wenigstens nahezu allseitig geschlossene Ausnehmung ausgebildet. Dies stellt eine besondere Ausgestaltung der Ausnehmung dar, die grundsätzlich zu wenigstens einer Oberfläche der Magnetanordnung hin offen oder gegenüber den Oberflächen der Magnetanordnung wenigstens nahezu vollständig geschlossen und damit von jeder dieser Oberflächen beliebig beabstandet geformt sein kann, so dass eine große Variationsbreite für die Anordnung und Gestaltung dieser wenigstens einen Ausnehmung gegeben ist. Dabei kann vorteilhaft eine geschlossene Ausnehmung der beschriebenen Art z.B. durch eine zweiteilige Ausgestaltung des mit einem permanentmagnetischen Werkstoff ausgebildeten Abschnitts erzielt werden, wobei wenigstens eines der Teile eine offene Ausnehmung enthält und beide Teile mit dieser wenigstens einen Ausnehmung einander zugekehrt aneinandergefügt werden und damit die wenigstens eine offene Ausnehmung geschlossen wird.

Weist die erfindungsgemäße Magnetanordnung und insbesondere der mit permanentmagnetischem Werkstoff ausgebildete Abschnitt derselben eine Mittelachse und/oder Mittelebene auf und ist insbesondere eine um diese Mittelachse und/oder Mittelebene symmetrische Verteilung des magnetischen Feldes bzw. Flusses angestrebt, ist gemäß einer weiteren bevorzugten Ausführungsform der erfindungsgemäßen Magnetanordnung die wenigstens eine nichtmagnetische Ausnehmung im permanentmagnetischen Werkstoff wenigstens weitgehend symmetrisch zu einer Mittelachse und/oder Mittelebene der Magnetanordnung ausgebildet. Dies ist bei elektrischen Maschinen bevorzugt gegeben. Damit lassen sich die günstigen magnetischen Eigenschafte der erfindungsgemäßen Magnetanordnung mit einer vereinfachten Herstellung verbinden.

Nach der erfindungsgemäßen Magnetanordnung umfasst diese wenigstens einen mit einem magnetisch leitenden Werkstoff ausgebildeten Abschnitt, in dem wenigstens eine nichtmagnetische Ausnehmung ausgebildet ist zum Beeinflussen einer Richtung und/oder Stärke eines von der Magnetanordnung hervorgerufenen Magnetfeldes und/oder magnetischen Flusses.

Als magnetisch leitender Werkstoff wird hier bevorzugt ein Werkstoff mit einer hohen magnetischen Permeabilität verstanden, insbesondere wie Eisen oder ein Werkstoff mit vergleichbaren magnetischen Eigenschaften. Vorteilhaft wird bei dieser Ausgestaltung permanentmagnetischer Werkstoff durch magnetisch leitenden Werkstoff, z.B. Eisen, ersetzt, wodurch insbesondere eine Kostenersparnis erzielt wird. Darüber hinaus wird mit dieser Ausgestaltung auch eine Beeinflussung der Verteilung des magnetischen Feldes bzw. Flusses mit der Wirkung einer Steigerung der Kraft, bzw. des Drehmoments und damit der Leistung der elektrischen Maschine erreicht.

In der erfindungsgemäßen Magnetanordnung ist die wenigstens eine nichtmagnetische Ausnehmung im magnetisch leitenden Werkstoff als eine wenigstens nahezu allseitig geschlossene Ausnehmung ausgebildet.

Bei einer bevorzugten Ausführungsform der erfindungsgemäßen Magnetanordnung ist die wenigstens eine nichtmagnetische Ausnehmung im magnetisch leitenden Werkstoff wenigstens weitgehend symmetrisch zur Mittelachse und/oder Mittelebene der Magnetanordnung ausgebildet.

Für die Ausgestaltung und Herstellungsweise der wenigstens einen nichtmagnetischen Ausnehmung im magnetisch leitenden Werkstoff gelten die Erläuterungen zu den und die Vorteile der nichtmagnetischen Ausnehmungen im permanentmagnetischen Werkstoff entsprechend.

Die oben genannte Aufgabe wird weiterhin gelöst durch eine elektrische Maschine, die gekennzeichnet ist durch wenigstens eine Magnetanordnung der vorbeschriebenen Art und Gestaltung. Bevorzugt ersetzt diese wenigstens eine Magnetanordnung in vorteilhafter Weise herkömmlich gestaltete Magnetanordnungen, insbesondere herkömmlich gestaltete Magnete, vorzugsweise herkömmlich gestaltete Permanentmagnete.

Die erfindungsgemäße elektrische Maschine ist auf einfache Art zu einer besonders leistungsstarken Betriebsweise sowie einem kostengünstigen und leichten Aufbau durch den Einsatz preiswerter und gewichtsparender Magnetanordnungen ausgestaltet.

In einer vorteilhaften Weiterbildung ist die erfindungsgemäße elektrische Maschine gekennzeichnet durch eine Ausbildung als Reluktanzmaschine oder Permanentmagnet-Synchronmotor. Derartige Maschinen stellen besonders bevorzugte Ausführungen elektrischer Maschinen dar, weil sie einfach aufgebaut, leistungsstark, einfach und genau regel- bzw. steuerbar sowie flexibel und universell einsetzbar sind.

### Kurze Beschreibung der Zeichnungen

In der Zeichnung, in der übereinstimmende Elemente in allen Figuren mit denselben Bezugszeichen versehen sind und zu der auf eine wiederholte Beschreibung dieser Elemente verzichtet wird, zeigen:
- Figur 1: eine grob schematische Darstellung mit einem Beispiel einer nach herkömmlichem Bauprinzip gestalteten Magnetanordnung,
- Figur 2: eine grob schematische Darstellung mit einem Beispiel für eine mit Figur 1 vergleichbare, jedoch nach der erfindungsgemäßen Lehre gestaltete Magnetanordnung, und
- Figur 3: eine grob schematische Darstellung eines Beispiels für einen Rotorblechausschnitt bzw. eine Teilansicht eines Querschnitts durch einen Rotor einer erfindungsgemäß ausgebildeten elektrischen Maschine rechtwinklig zur Rotationsachse des Rotors, aufweisend Magnetanordnungen gemäß Figur 2.

Die in der Zeichnung dargestellten Konfigurationen bzw. Ausführungsbeispiele der Erfindung werden im nachfolgenden näher beschrieben.

### Bevorzugte Ausführungsform der Erfindung

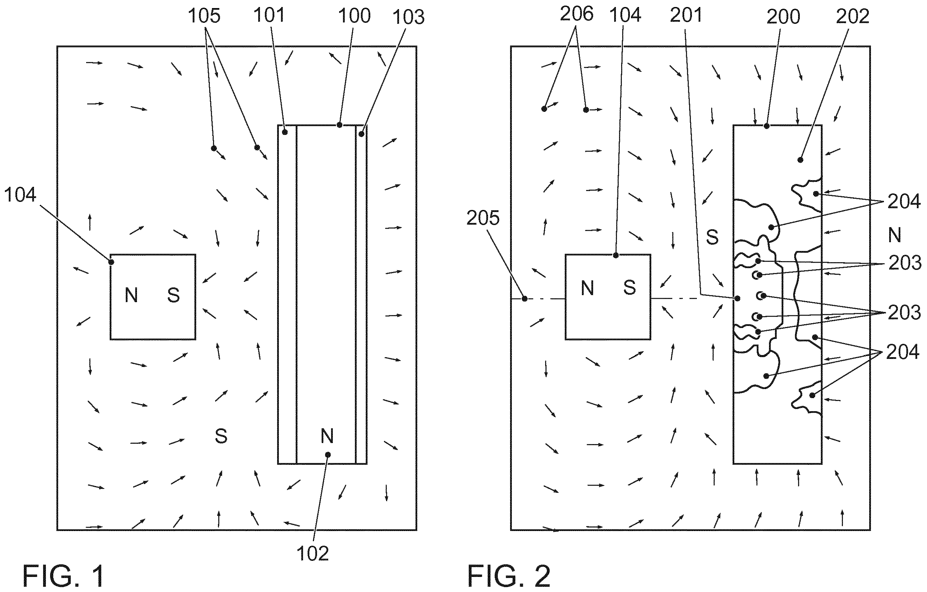

In Figur 1 ist zur Erläuterung der technischen Fallgestaltung eine grob schematische Darstellung eines Beispiels eines Modells einer mit dem Bezugszeichen 100 versehenen Magnetanordnung wiedergegeben, die nach herkömmlichem Bauprinzip gestaltet ist. Die Magnetanordnung 100 ist im Querschnitt wiedergegeben und umfasst einen quaderförmigen Rechteckmagneten 101 mit einem magnetischen Nordpol N und einem magnetischen Südpol S. Der Rechteckmagnet 101 bildet einen mit einem permanentmagnetischen Werkstoff ausgebildeten Abschnitt der Magnetanordnung 100. An diesen schließt sich am magnetischen Nordpol N ein weiterer, ebenfalls quaderförmiger und mit einem magnetisch leitenden Werkstoff ausgebildeter Abschnitt 102 an, der z.B. aus magnetisierbarem Stahl bzw. Eisen geformt ist. An den mit einem magnetisch leitenden Werkstoff ausgebildeten Abschnitt 102 schließt sich dem magnetischen Nordpol N des Rechteckmagneten gegenüber ein dritter, nichtmagnetischer Abschnitt 103 an, der z.B. mit Luft oder einem anderen Werkstoff gebildet ist, der ebenfalls eine relative magnetische Permeabilitätskonstante von wenigstens nahezu 1 hat. Der Rechteckmagnet 101, der mit magnetisch leitendem Werkstoff ausgebildete Abschnitt 102 und der dritte, nichtmagnetische Abschnitt 103 grenzen je flächig mit ihren größten Oberflächen aneinander.

In Figur 1 ist ferner ein Gegenmagnet 104 ebenfalls quaderförmiger Ausbildung grob schematisch wiedergegeben, dessen magnetischer Südpol S dem magnetischen Südpol S der Magnetanordnung 100 gegenübersteht, d.h. die Ausrichtung des vom Gegenmagneten 104 aufgespannten magnetischen Feldes ist umgekehrt zu derjenigen der Magnetanordnung 100 und Gegenmagnet 104 und Magnetanordnung 100 stoßen einander ab. Zur Verdeutlichung sind in Figur 1 ferner Feldlinienverläufe 105 eines magnetischen Feldes, welches aus einer Überlagerung der von der Magnetanordnung 100 und dem Gegenmagneten 104 aufgespannten magnetischen Felder resultiert, symbolisch angedeutet.

Gegenüber dieser nach herkömmlichem Bauprinzip gestalteten Magnetanordnung 100 mit quaderförmigen, glattflächigen Abschnitten 101, 102, 103 zeigt Figur 2 eine grob schematische Darstellung mit einem Beispiel für eine mit Figur 1 vergleichbare, jedoch nach der erfindungsgemäßen Lehre gestaltete Magnetanordnung 200. Diese weist ebenfalls einen mit einem permanentmagnetischen Werkstoff ausgebildeten Abschnitt 201 und einen mit einem magnetisch leitenden Werkstoff ausgebildeten Abschnitt 202 auf. In dem mit permanentmagnetischem Werkstoff ausgebildeten Abschnitt 201 sind mehrere unterschiedliche nichtmagnetische Ausnehmungen 203 ausgebildet. Auch in dem mit magnetisch leitendem Werkstoff ausgebildeten Abschnitt 202 sind mehrere unterschiedliche nichtmagnetische Ausnehmungen 204 ausgebildet. Im dargestellten Beispiel der Magnetanordnung 200 sind zwei der nichtmagnetischen Ausnehmungen 203 im mit permanentmagnetischem Werkstoff ausgebildeten Abschnitt 201 zur Seite des magnetischen Südpols S hin offen ausgestaltet und in Randbereichen des mit permanentmagnetischem Werkstoff ausgebildeten Abschnitts 201 belegen, wohingegen in dieser Darstellung drei weitere, mittig im mit permanentmagnetischem Werkstoff ausgebildeten Abschnitt 201 belegene nichtmagnetische Ausnehmungen 203 geschlossen ausgestaltet, d.h. allseitig von permanentmagnetischem Werkstoff umgeben sind. Der mit magnetisch leitendem Werkstoff ausgebildete Abschnitt 202 weist in diesem Beispiel nach Figur 2 insgesamt fünf nichtmagnetische Ausnehmungen 204 auf, von denen zwei in Randbereichen des mit magnetisch leitendem Werkstoff ausgebildeten Abschnitts 202 an den mit permanentmagnetischem Werkstoff ausgebildeten Abschnitt 201 grenzen sowie zum magnetischen Südpol S offen sind, wohingegen drei weitere der nichtmagnetischen Ausnehmungen 204 zum magnetischen Nordpol N offen sind. Die nichtmagnetischen Ausnehmungen 203, 204 sind außerdem symmetrisch zu einer Mittelachse bzw. hier Mittelebene 205 der Magnetanordnung 200 ausgestaltet und weisen in diesem Beispiel eine entlang einer senkrecht zur Zeichenebene verlaufenden Koordinatenachse gleichbleibende Querschnittskontur auf.

Der magnetisch leitende Werkstoff ist bevorzugt wieder magnetisierbarer Stahl bzw. Eisen, die nichtmagnetischen Ausnehmungen 203, 204 sind z.B. mit Luft oder einem anderen Werkstoff gebildet, der ebenfalls eine relative magnetische Permeabilitätskonstante von wenigstens nahezu 1 hat. Als permanentmagnetischer Werkstoff ist z.B. ein NdFeB-Werkstoff verwendet. Dieser Werkstoff ist zwar sehr kostenintensiv, weist aber eine besonders hohe magnetische Energiedichte auf und ermöglicht dadurch sehr kompakte Magnetanordnungen mit hohen magnetischen Kräften.

In der Darstellung gemäß Figur 2 ist wieder ein Gegenmagnet 104 dargestellt. In Figur 2 sind außerdem Feldlinienverläufe 206 eines magnetischen Feldes, welches aus einer Überlagerung der von der Magnetanordnung 200 und dem Gegenmagneten 104 aufgespannten magnetischen Felder resultiert, symbolisch angedeutet. Aus einem Vergleich der Feldlinienverläufe 105 der Figur 1 mit den Feldlinienverläufen 206 der Figur 2 ist ersichtlich, dass Richtung und Stärke des von der Magnetanordnung 200 hervorgerufenen Magnetfeldes bzw. magnetischen Flusses durch die veränderte Gestaltung des mit permanentmagnetischem Werkstoff ausgebildeten Abschnitts 201 und des mit magnetisch leitendem Werkstoff ausgebildeten Abschnitts 202 beeinflusst worden sind. In dem skizzierten Beispiel ist durch die erfindungsgemäße Ausbildung bei zwischen den Magnetanordnungen 100 aus Figur 1 und 200 aus Figur 2 unveränderter Masse permanentmagnetischen Werkstoffs eine Steigerung der magnetischen Kraft von 518% erzielbar. Wird die Gestaltung des mit permanentmagnetischem Werkstoff ausgebildeten Abschnitts 201 derart abgeändert, dass die Masse permanentmagnetischen Werkstoffs verringert wird, ist neben einer Steigerung der magnetischen Kraft auch eine Einsparung an permanentmagnetischem Werkstoff oder im Grenzfall bei unveränderter magnetischer Kraft eine besonders hohe Einsparung an permanentmagnetischem Werkstoff möglich.

In einer Abwandlung der Magnetanordnungen 100, 200, insbesondere der Magnetanordnung 200, sind diese rotationssymmetrisch ausgebildet, die Magnetanordnung 200 insbesondere um die Mittelachse 205. Die nichtmagnetischen Ausnehmungen 203, 204 sind dann rotationssymmetrisch um die Mittelachse 205 ausgestaltet. In der Querschnittsdarstellung entsprechend Figur 2 bleiben dabei die Feldlinienverläufe 206 zumindest weitgehend unverändert.

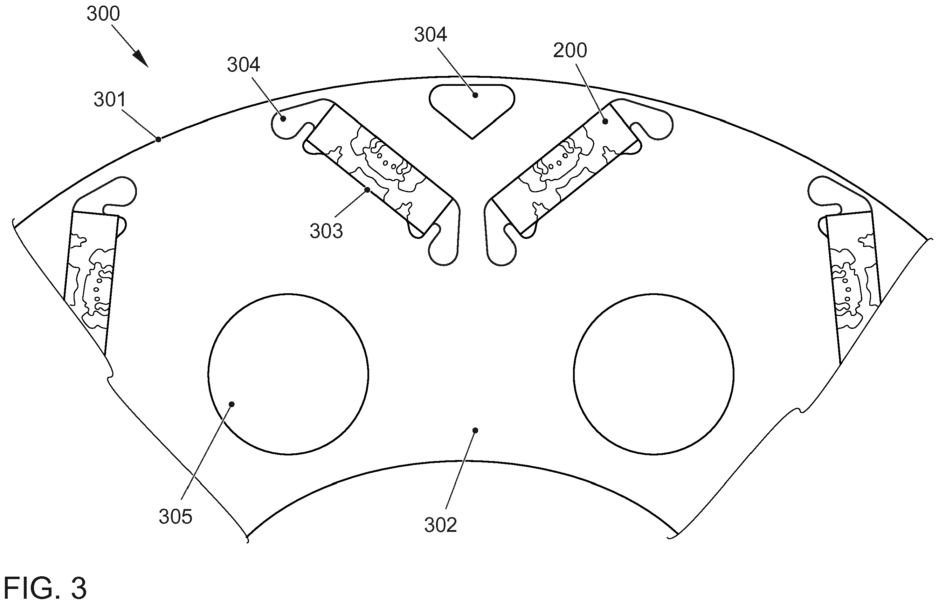

In Figur 3 ist in grob schematischer Darstellung ein Beispiel für einen Rotorblechausschnitt bzw. eine Teilansicht eines Querschnitts durch einen Rotor 301 einer erfindungsgemäß ausgebildeten, nicht im einzelnen abgebildeten elektrischen Maschine 300 rechtwinklig zu einer nicht dargestellten Rotationsachse des Rotors 301 wiedergegeben. Der Rotor 301 ist mit einem Kern gebildet, der zusammengesetzt ist aus Ankerblechen 302 von magnetischem Stahl, deren Kontur teilweise der Rotorblechausschnitt nach Figur 3 zeigt. In diesem Kern sind Aufnahmeschlitze 303 für Permanentmagnete ausgebildet. Weiterhin weisen die Ankerbleche 302 unterschiedliche Ausnehmungen auf, von denen einige, mit dem Bezugszeichen 304 versehene zur Beeinflussung des magnetischen Feldes bzw. Flusses im Rotor 301 und andere, mit dem Bezugszeichen 305 versehene zum Führen eines Kühlmediums durch den Rotor 301 zwecks Abfuhr von Betriebswärme bzw. zur Gewichtsersparnis dienen.

Die Aufnahmeschlitze 303 sind im Beispiel der Figur 3 paarweise entlang Seiten gleichschenkliger Dreiecke angeordnet. An der Stelle herkömmlich gestalteter Permanentmagnete sind in die Aufnahmeschlitze 303 , Magnetanordnungen 200 eingesetzt, die bevorzugt gemäß Figur 2 gestaltet sind. Im dargestellten Beispiel ergibt sich dadurch bevorzugt eine beträchtliche Einsparung des kostspieligen permanentmagnetischen Werkstoffs bei gleichbleibender bzw. gesteigerter Leistung der Maschine 300.

### Bezugszeichenliste

- 100: Magnetanordnung, mit herkömmlichem Bauprinzip gestaltet
- 101: Rechteckmagnet von 100
- 102: Mit magnetisch leitendem Werkstoff ausgebildeter Abschnitt von 100
- 103: Nichtmagnetischer Abschnitt von 100
- 104: Gegenmagnet
- 105: Feldlinienverläufe

- 200: Nach der erfindungsgemäßen Lehre gestaltete Magnetanordnung
- 201: Mit permanentmagnetischem Werkstoff ausgebildeter Abschnitt von 200
- 202: Mit magnetisch leitendem Werkstoff ausgebildeter Abschnitt von 200
- 203: Nichtmagnetische Ausnehmungen in 201
- 204: Nichtmagnetische Ausnehmungen in 202
- 205: Mittelachse bzw. Mittelebene von 200
- 206: Feldlinienverläufe

- 300: Elektrische Maschine
- 301: Rotor von 300
- 302: Ankerblech von 301
- 303: Aufnahmeschlitze in 301 bzw. 302
- 304: Ausnehmungen zur Beeinflussung des magnetischen Feldes bzw. Flusses in 301
- 305: Ausnehmungen für Kühlmedium bzw. zur Gewichtsersparnis

- N: Magnetischer Nordpol
- S: Magnetischer Südpol

## Patentansprüche

1. Magnetanordnung (200), für eine Ausnehmung in einem Stator- und/oder einem Rotorblechschnitt als Ersatz für herkömmlich gestaltete Permanentmagnete, für eine elektrische Maschine, umfassend einen magnetischen Nordpol N und einen magnetischen Südpol S mit wenigstens einem mit einem permanentmagnetischen Werkstoff ausgebildeten Abschnitt (201), in dem wenigstens eine nichtmagnetische Ausnehmung (203) ausgebildet ist zum Beeinflussen einer Richtung und/oder Stärke eines von der Magnetanordnung (200) hervorgerufenen Magnetfeldes und/oder magnetischen Flusses (206), wobei die wenigstens eine nichtmagnetische Ausnehmung (203) im permanentmagnetischen Werkstoff (201) als eine allseitig geschlossene Ausnehmung ausgebildet ist, wobei die nichtmagnetische Ausnehmung (203) allseitig von permanentmagnetischem Werkstoff umgeben ist, wobei die Magnetanordnung (200) weiterhin wenigstens einen mit einem magnetisch leitenden Werkstoff ausgebildeten Abschnitt (202) umfasst, in dem wenigstens eine nichtmagnetische Ausnehmung (204) ausgebildet ist zum Beeinflussen einer Richtung und/oder Stärke eines von der Magnetanordnung (200) hervorgerufenen Magnetfeldes und/oder magnetischen Flusses (206).

2. Magnetanordnung (200) nach Anspruch 1,
**dadurch gekennzeichnet, dass**
die wenigstens eine nichtmagnetische Ausnehmung (203) im permanentmagnetischen Werkstoff (201) wenigstens weitgehend symmetrisch zu einer Mittelachse und/oder Mittelebene (205) der Magnetanordnung (200) ausgebildet ist.

3. Magnetanordnung (200) nach Anspruch 2,
**dadurch gekennzeichnet, dass**
die wenigstens eine nichtmagnetische Ausnehmung (204) im magnetisch leitenden Werkstoff (202) als eine wenigstens nahezu allseitig geschlossene Ausnehmung ausgebildet ist.

4. Magnetanordnung (200) nach einem oder mehreren der Ansprüche 1 bis 3,
**dadurch gekennzeichnet, dass**
die wenigstens eine nichtmagnetische Ausnehmung (204) im magnetisch leitenden Werkstoff (202) wenigstens weitgehend symmetrisch zur Mittelachse und/oder Mittelebene (205) der Magnetanordnung (200) ausgebildet ist.

5. Magnetanordnung (200) nach einem oder mehreren der Ansprüche 1 bis 4,
**dadurch gekennzeichnet, dass**
- zwei der nichtmagnetischen Ausnehmungen (203) im mit permanentmagnetischem Werkstoff ausgebildeten Abschnitt (201) zur Seite des magnetischen Südpols S hin offen ausgestaltet und in Randbereichen des mit permanentmagnetischem Werkstoff ausgebildeten Abschnitts (201) belegen sind,
- drei weitere, mittig im mit permanentmagnetischem Werkstoff ausgebildeten Abschnitt (201) belegene nichtmagnetische Ausnehmungen (203) allseitig von permanentmagnetischem Werkstoff umgeben sind,
- wenigstens ein mit einem magnetisch leitenden Werkstoff ausgebildeter Abschnitt (202) vorgesehen ist, aufweisend insgesamt fünf nichtmagnetische Ausnehmungen (204), von denen
- zwei in Randbereichen des mit magnetisch leitendem Werkstoff ausgebildeten Abschnitts (202) an den mit permanentmagnetischem Werkstoff ausgebildeten Abschnitt (201) grenzen sowie zum magnetischen Südpol S offen sind,
- wohingegen drei weitere der nichtmagnetischen Ausnehmungen (204) zum magnetischen Nordpol N offen sind,
wobei die nichtmagnetischen Ausnehmungen (203, 204) symmetrisch zu einer Mittelachse und/oder Mittelebene (205) der Magnetanordnung (200) ausgestaltet sind.

6. Magnetanordnung (200) nach Anspruch 5,
**dadurch gekennzeichnet, dass**
eine entlang einer senkrecht zum Querschnitt verlaufenden Koordinatenachse gleichbleibende Querschnittskontur aufweisen

7. Magnetanordnung (200) nach einem oder mehreren der Ansprüche 5 bis 6,
**dadurch gekennzeichnet, dass**
der magnetisch leitende Werkstoff magnetisierbarer Stahl oder Eisen ist.

8. Magnetanordnung (200) nach einem oder mehreren der Ansprüche 5 bis 7,
**dadurch gekennzeichnet, dass**
die nichtmagnetischen Ausnehmungen (203, 204) mit Luft oder einem anderen Werkstoff gebildet sind, der eine relative magnetische Permeabilitätskonstante von wenigstens 1 hat.

9. Magnetanordnung (200) nach einem oder mehreren der Ansprüche 5 bis 8,
**dadurch gekennzeichnet, dass**
als permanentmagnetischer Werkstoff ein NdFeB-Werkstoff verwendet ist.

10. Elektrische Maschine (300),
**gekennzeichnet durch**
wenigstens eine Magnetanordnung (200) nach einem oder mehreren der vorhergehenden Ansprüche.

11. Elektrische Maschine (300) nach Anspruch 10,
**gekennzeichnet durch**
eine Ausbildung als Reluktanzmaschine oder Permanentmagnet-Synchronmotor.

## Claims

1. Magnet arrangement (200), for a clearance in a stator lamination and/or a rotor lamination as a replacement for conventionally designed permanent magnets, for an electrical machine, comprising a magnetic north pole N and a magnetic south pole S with at least one portion (201) which is formed by a permanently magnetic material and in which at least one non-magnetic clearance (203) is formed for influencing a direction and/or strength of the magnetic field and/or magnetic flux (206) induced by a magnet arrangement (200), wherein the at least one non-magnetic clearance (203) in the permanently magnetic material (201) is formed as a clearance that is closed on all sides, the non-magnetic clearance (203) being surrounded by permanently magnetic material on all sides, the magnet arrangement (200) also comprising at least one portion (202) which is formed from a magnetically conducting material and in which at least one non-magnetic clearance (204) is formed for influencing a direction and/or strength of a magnetic field and/or magnetic flux (206) induced by the magnet arrangement (200).

2. Magnet arrangement (200) according to Claim 1,
**characterized in that**
the at least one non-magnetic clearance (203) in the permanently magnetic material (201) is formed at least largely symmetrically in relation to a central axis and/or central plane (205) of the magnet arrangement (200).

3. Magnet arrangement (200) according to Claim 2,
**characterized in that**
the at least one non-magnetic clearance (204) in the magnetically conducting material (202) is formed as a clearance that is at least virtually closed on all sides.

4. Magnet arrangement (200) according to one or more of Claims 1 to 3,
**characterized in that**
the at least one non-magnetic clearance (204) in the magnetically conducting material (202) is formed at least largely symmetrically in relation to the central axis and/or central plane (205) of the magnet arrangement (200).

5. Magnet arrangement (200) according to one or more of Claims 1 to 4,
**characterized in that**
- two of the non-magnetic clearances (203) in the portion (201) formed by permanently magnetic material are designed as open towards the side of the magnetic south pole S and are covered in peripheral regions of the portion (201) formed by permanently magnetic material,
- three further non-magnetic clearances (203), covered centrally in the portion (201) formed by permanently magnetic material, are surrounded by permanently magnetic material on all sides,
- at least one portion (202) formed by a magnetically conducting material is provided, having a total of five non-magnetic clearances (204), of which
- two in peripheral regions of the portion (202) formed by magnetically conducting material are adjacent to the portion (201) formed by permanently magnetic material and are open towards the magnetic south pole S,
- whereas another three of the non-magnetic clearances (204) are open towards the magnetic north pole N,
the non-magnetic clearances (203, 204) being designed symmetrically in relation to a central axis and/or central plane (205) of the magnet arrangement (200).

6. Magnet arrangement (200) according to Claim 5,
**characterized in that**
have a constant cross-sectional contour along a coordinate axis running along a perpendicular to the cross section has a constant cross-sectional contour.

7. Magnet arrangement (200) according to one or both of Claims 5 and 6,
**characterized in that**
the magnetically conducting material is magnetizable steel or iron.

8. Magnet arrangement (200) according to one or more of Claims 5 to 7,
**characterized in that**
the non-magnetic clearances (203, 204) are formed by air or some other material that has a relative magnetic permeability constant of at least 1.

9. Magnet arrangement (200) according to one or more of Claims 5 to 8,
**characterized in that**
an NdFeB material is used as the permanently magnetic material.

10. Electrical machine (300),
**characterized by** at least one magnet arrangement (200) according to one or more of the preceding claims.

11. Electrical machine (300) according to Claim 10,
**characterized by**
being formed as a reluctance machine or a permanentmagnet synchronous motor.

## Revendications

1. Dispositif magnétique (200) destiné à un évidement dans une section de tôle de stator et/ou de rotor en remplacement d'aimants permanents conçus de manière conventionnelle pour une machine électrique, comprenant un pôle nord magnétique N et un pôle sud magnétique S présentant au moins une section (201) constituée d'un matériau magnétique permanent, dans laquelle au moins un évidement non magnétique (203) est réalisé afin d'agir sur une direction et/ou un champ magnétique et/ou flux magnétique (206) provoqué par le dispositif magnétique (200),
dans lequel l'au moins un évidement non magnétique (203) ménagé dans le matériau magnétique permanent (201) est réalisé sous la forme d'un évidement fermé sur tous ses côtés, dans lequel l'évidement non magnétique (203) est entouré sur tous ses côtés par un matériau magnétique permanent, dans lequel le dispositif magnétique (200) comprend en outre au moins une section (202) constituée d'un matériau magnétiquement conducteur dans lequel au moins un évidement non magnétique (204) est réalisé afin d'agir sur une direction et/ou une intensité d'un champ magnétique et/ou d'un flux magnétique (206) provoqué par le dispositif magnétique (200).

2. Dispositif magnétique (200) selon la revendication 1,
**caractérisé en ce que** l'au moins un évidement non magnétique (203) ménagé dans le matériau magnétique permanent (201) est réalisé de manière au moins sensiblement symétrique par rapport à un axe central et/ou à un plan central (205) du dispositif magnétique (200) .

3. Dispositif magnétique (200) selon la revendication 2,
**caractérisé en ce que** l'au moins un évidement non magnétique (204) ménagé dans le matériau magnétiquement conducteur (202) est réalisé sous la forme d'un évidement fermé sur au moins pratiquement tous ses côtés.

4. Dispositif magnétique (200) selon l'une ou plusieurs des revendications 1 à 3,
**caractérisé en ce que** l'au moins un évidement non magnétique (204) ménagé dans le matériau magnétiquement conducteur (202) est réalisé de manière au moins sensiblement symétrique par rapport à l'axe central et/ou au plan central (205) du dispositif magnétique (200).

5. Dispositif magnétique (200) selon l'une ou plusieurs des revendications 1 à 4,
**caractérisé en ce que**
- deux des évidements non magnétiques (203) ménagés dans la section (201) constituée de matériau magnétique permanent sont configurés de manière à être ouverts vers le côté du pôle sud magnétique S et sont ménagés dans les zones périphériques de la section (201) constituée de matériau magnétique permanent,
- trois autres évidements non magnétiques (203) ménagés au centre de la section (201) constituée de matériau magnétique permanent sont entourés sur tous leurs côtés par un matériau magnétique permanent,
- il est prévu au moins une section (202) constituée de matériau magnétiquement conducteur, comportant au total cinq évidements non magnétiques (204), parmi lesquels
- deux sont adjacents à la section (201) constituée de matériau magnétiquement conducteur dans les zones périphériques de la section (202) constituée de matériau magnétiquement conducteur et sont ouverts vers le pôle sud magnétique S,
- tandis que trois autres évidements non magnétiques (204) sont ouverts vers le pôle nord magnétique N,
dans lequel les évidements non magnétiques (203, 204) sont agencés symétriquement par rapport à un axe central et/ou à un plan central (205) du dispositif magnétique (200) .

6. Dispositif magnétique (200) selon la revendication 5, **caractérisé en ce que** présentent un contour de section transversale constant le long d'un axe de coordonnées perpendiculaire à la section transversale.

7. Dispositif magnétique (200) selon l'une ou plusieurs des revendications 5 à 6,
**caractérisé en ce que** le matériau magnétiquement conducteur est de l'acier ou du fer magnétisable.

8. Dispositif magnétique (200) selon l'une ou plusieurs des revendications 5 à 7,
**caractérisé en ce que** les évidements non magnétiques (203, 204) sont formés par de l'air ou un autre matériau présentant une constante de perméabilité magnétique relative d'au moins 1.

9. Dispositif magnétique (200) selon l'une ou plusieurs des revendications 5 à 8,
**caractérisé en ce qu'**un matériau de NdFeB est utilisé en tant que matériau magnétique permanent.

10. Machine électrique (300) **caractérisée par** au moins un dispositif magnétique (200) selon l'une ou plusieurs des revendications précédentes.

11. Machine électrique (300) selon la revendication 10, **caractérisée par** une réalisation sous forme de machine à réluctance ou de moteur synchrone à aimant permanent.
